# EUROPEAN PATENT SPECIFICATION

(11) **EP 2 063 590 B1**
(45) Date of publication and mention of the grant of the patent: **25.01.2012**
(21) Application number: 07816942.2
(22) Date of filing: 21.09.2007
(51) Int. Cl.: H04L 12/58

(54) **A METHOD AND SYSTEM FOR TRANSMITTING EMAIL AND A PUSH MAIL SERVER**
VERFAHREN UND SYSTEM ZUR ÜBERMITTLUNG VON EMAIL UND EIN PUSH MAIL SERVER
PROCÉDÉ ET SYSTÈME DE TRANSMISSION DE COURRIER ÉLECTRONIQUE ET SERVEUR DE COURRIER ÉLECTRONIQUE POUSSÉ

(30) Priority: 22.09.2006 CN 200610139755
(43) Date of publication of application: 27.05.2009
(73) Proprietor: Huawei Technologies Co., Ltd., Longgang District, Shenzhen Guangdong 518129 (CN)
(72) Inventor: YIN, Weihua, Shenzhen, Guangdong 518129 (CN)
(74) Representative: Gulde Hengelhaupt Ziebig & Schneider
(86) International application number: PCT/CN2007/070751
(87) International publication number: WO 2008/040248

(56) References cited:
- WO-A-2004/088942
- CN-A- 1 457 181
- CN-A- 1 650 586
- US-A1- 2004 019 649
- US-A1- 2006 224 750

## Description

### FIELD OF THE INVENTION

The present invention relates to the technical fields of mobile communication and mail transmission, and more particularly, to a mail transmission system and method and a push mail server.

### BACKGROUND

With the emergence of computer network, the arising of E-mail, as a technology that implements normal mail transmission via network communication, allows people to exchange an electronic medium mail using a computer connected to the Internet. As a result, the email is widely used in the Internet.

With the development of mobile communication technologies, various information services based on the mobile communication network are rapidly developed. For example, Multimedia Messaging Server (MMS) is developed based on Short Messaging Service (SMS) and Enhanced Messaging Service (EMS), which implements the transmission of information content in rich media format such as text, picture, audio and video between a mobile terminal and a service provider/content provider (SP/CP).

Mobile terminals are far more widely used among people than computers are. Furthermore, the mobile terminals have a flexible and convenient mobility. Thus, browsing and transmitting emails using mobile terminals may find wider applications. As a result, PUSH Mail technology has been extensively used at a certain level.

The present Push Mail in use is a whole set of a private mail system composed of from a mobile terminal to a server, and is primary used for group users such as a corporate or an organization.

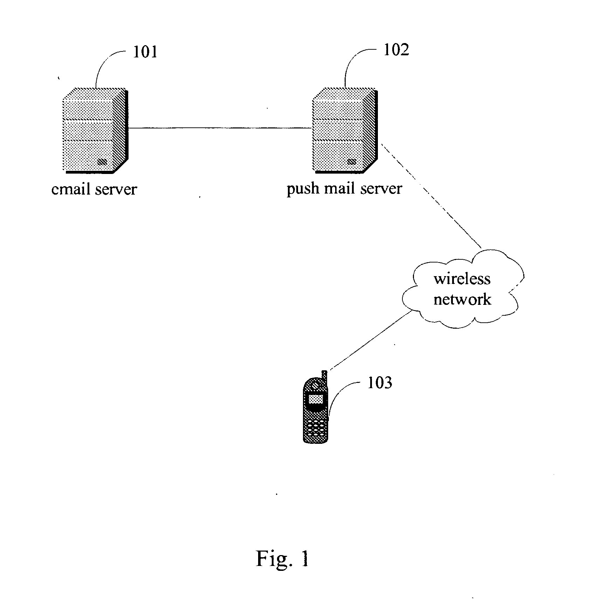

Fig. 1 is a schematic diagram of the architecture for the conventional Push Mail. As shown in Fig. 1, in this technical solution, besides an Email Server 101, a PUSH Mail Server 102 is provided for the corporate users. The private mobile terminal 103 used by a mobile user, when the Email server 101 of the corporate users receives a mail, automatically notifies the Push Mail Server 102, which then notifies the private mobile terminal 103 of the change status for the corporate mailbox, through a private protocol and via a wireless network. The private mobile terminal 103 initiates the related operations to perform receiving, browsing, and deleting of the mail.

However, the current Push Mail is a private mail system, which is only for specific corporate users and lacks openness. Besides, during the mail pushing, a mobile user must use a private mobile terminal to support the service, which is not universal.
WO 2004/088942 A1 relates to a method for immediate delivery of email to telecommunication terminals. A special push server is provided in addition to the e-mail server of the e-mail provider. To be able to use the push mail service, the subscriber must establish forwarding at the e-mail server, so that incoming e-mails can be forwarded to a specially established "push e-mail" address of the push mail server. The push mail server automatically sends the e-mails to the e-mail client on the terminal for processing.

### SUMMARY

The invention provides a mail transmission system, which enables a normal mobile terminal based on an open communication protocol to receive emails in a mobile communication network.

The invention provides a push mail server, which enables a normal mobile terminal based on an open communication protocol to receive emails in a mobile communication network.

The invention further provides a mail receiving/sending system, which enables a normal mobile terminal based on an open communication protocol to receive/send emails in a mobile communication network.

The invention provides a method for mail transmission, which enables a normal mobile terminal based on an open communication protocol to receive emails in a mobile communication network.

The invention provides a method for mail transmission, which enables a normal mobile terminal based on an open communication protocol to send emails in a mobile communication network.

The invention provides a method for receiving a mail by a mobile terminal, which enables a normal mobile terminal based on an open communication protocol to receive emails in a mobile communication network.

The invention provides a method for sending a mail by a mobile terminal, which enables a normal mobile terminal based on an open communication protocol to send emails in a mobile communication network.

To meet the above objectives, the technical solutions of the invention are implemented as follows.

The invention discloses a push mail server including: a terminal binding subsystem adapted to store an identification of a mobile terminal which has registered with and subscribed to a push mail service and email-box information in an email server bound to the identification of the mobile terminal; a mail push core processing module adapted to deliver push notifications and forward mails according to a binding relationship between a mobile terminal and a mailbox stored in the terminal binding subsystem and initiate an inquiry request about the change information of a mailbox to a mail protocol interface module; a mail protocol interface module being adapted to communicate with the email server to retrieve or send emails, and inquire about change information of a mailbox according to the inquiry request about change information of a mailbox initiated by the mail push core processing module; and a multimedia message protocol conversion module connected to the mail push core processing module and adapted to communicate with a multimedia message center, and implement conversion between a multimedia message format and a mail format.

The invention discloses a mobile mail receiving/sending system including an email server. The system further includes a push mail server and a multimedia message service center communicatively connected to the push mail server.

The multimedia message service center is adapted to deliver the multimedia message according to the received mobile terminal identification.

The invention discloses a method for mail transmission. The method includes: inquiring, by a push mail server, about change information of a mailbox in an email server bound to an identification of a mobile terminal, according to the identification of the mobile terminal which has registered with and subscribed to a push mail service; transmitting, by the push mail server, prompt information of receiving a mail to the mobile terminal, after retrieving the change information of the mailbox; retrieving, by the push mail server, a mail from the email server, after the mobile terminal transmits an instruction for retrieving the mail to the push mail server, and converting the mail into information in a multimedia message format and transmitting it to a multimedia message service center; and delivering, by the multimedia message service center, the mail converted into a multimedia message format to the mobile terminal, and returning mail delivery result information to the push mail server.

It can be seen from the above technical solutions that, in the present invention, a push mail server stores a mobile terminal identification and email-box information in an email server bound to the identification; the push mail server retrieves an email from the email-box of the email server and converts the email into a mobile network message, and transmits the mobile network message and the mobile terminal identification bound to the email-box to a mobile network server; the mobile network server transmits the received mobile network message to a corresponding mobile terminal, according to the received mobile terminal identification. By the above technical solution, a mobile terminal based on an open communication protocol may receive/send emails in the mobile network.
According to the present technical solutions, the push mail server initiates an inquiry request about the change information of a mailbox, inquires about change information of the mailbox according to the inquiry request about the change information of the mailbox, and communicates with a multimedia message centre to implement conversion between a multimedia message format and a mail format. So the push mail server can actively push emails to the mobile terminal and provide the bidirectional conversion between a mail format and a multimedia message format. And the mobile terminal can receive emails converted from the mail server more efficiently.

### BRIEF DESCRIPTION OF THE DRAWING(S)

Figure 1 is a principle diagram of the architecture of the current Push Mail technical solution;

Figure 2 is a structure block diagram of a Push Mail Server of the invention;

Figure 3 is a structure block diagram of a mobile mail receiving/sending system of the invention;

Figure 4 is a flow chart of a first embodiment of a method for mail transmission of the invention; and

Figure 5 is a flow chart of a second embodiment of a method for mail transmission of the invention.

### DETAILED DESCRIPTION

The present invention aims to solve the problem of lacking openness and universality in the current Push Mail technology and provides a more open technical solution of mail transmission for both corporate and normal users, which allows a mobile user to receive and send emails timely in the mobile communication network using an ordinary mobile terminal. Therefore it has wide and universal applications.

A mail transmission system of the invention includes a push mail server adapted to store a mobile terminal identification and email-box information in an email server bound to the identification, obtain an email from the email-box in the email server and convert it into a mobile network message, and transmit the mobile network message and the mobile terminal identification bound to the email-box to a mobile network server. The mobile network server transmits the mobile network message to the corresponding mobile terminal according to the received mobile terminal identification.

Before retrieving an email from the email-box in the email server, the push mail server is further adapted to transmit prompt information to the mobile terminal according to the mobile terminal identification bound to the email-box, and retrieve the email from the email-box after receiving an instruction to retrieve the email returned from the mobile terminal. The push mail server is further configured to receive a mobile network message and email-box information of a receiver transmitted by the mobile network server, convert the received mobile network message into an email, and transmit the email to an email-box corresponding to the email-box information of the receiver in the email server.

In the above process, the mobile network server may be a short message center, and accordingly, the mobile network message is a short message. Alternatively, the mobile network server may be a multimedia message center, and accordingly, the mobile network message is a multimedia message.

To make the technical solution of the invention more apparent, in the following, the push mail server and mail receiving/sending system in the embodiments of the invention will be illustrated with reference to the accompanying figures and with an example of the mobile network server being a multimedia message service center and an example of the mobile network message being a multimedia message.

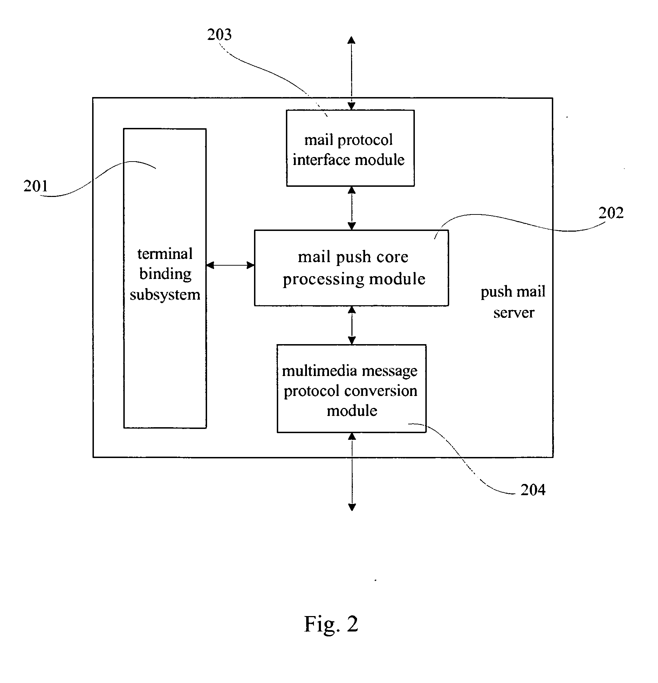

Fig. 2 is a structure block diagram of a push mail server of the invention. As shown in Fig. 2, the push mail server includes a terminal binding subsystem 201, a mail push core processing module 202, a mail protocol interface module 203, and a multimedia message protocol conversion module 204.

The terminal binding subsystem 201 is adapted to store an identification of a mobile terminal which has registered with and subscribed to a push mail service and email-box information in an email server bound to the mobile terminal identification. The mail push core processing module 202 is adapted to deliver a push notification and forward a mail according to the binding relationship between the mobile terminal and the mailbox stored in the terminal binding subsystem 201. The mail protocol interface module 203 is responsible for the communication with the email server and is adapted to retrieve or send a mail, and inquire about change information of a mailbox according to the inquiry request about change information of a mailbox initiated by the mail push core processing module 202. The multimedia message protocol conversion module 204 connected to the mail push core processing module 202 is responsible for the communication with the multimedia message center and is adapted to convert between a multimedia message format and a mail format.

The delivering of the push notification is as follows.

The mail push core processing module 202 inquiries about change information of a mailbox in an email server via the mail protocol interface module 203, and notifies a mobile terminal of the change information of the mailbox according to the mobile terminal identification bound to the mailbox stored in the terminal binding subsystem 201. Here, the mobile terminal identification uniquely identifies a mobile terminal. For example, it may be a mobile phone number.

The process for the mobile terminal to retrieve a mail is as follows.

The mobile terminal issues an instruction to retrieve a mail to the mail push core processing module 202, which inquiries about the mailbox information bound to the mobile terminal stored in the terminal binding subsystem 201 and retrieves the mail from the bound mailbox via the mail protocol interface module 203. The mail push core processing module 202 transmits the retrieved mail and the mobile terminal information (which may be stored upon receiving the instruction from the mobile terminal or may be inquired again from the terminal binding subsystem upon retrieving the mail) to the multimedia message protocol conversion module 204. The multimedia message protocol conversion module 204 converts the mail into a multimedia message format and transmits it to the multimedia message center with the mobile terminal identification. The multimedia message center transmits the mail as a multimedia message to the mobile terminal.

The process for the mobile terminal to send a mail is as follows:

Upon receiving the mail represented in a multimedia message format transmitted by the multimedia message center, the multimedia message protocol conversion module 204 converts the mail into a mail format and transmits it to the mail push core processing module 202. The mail push core processing module 202 inquiries about the mailbox information bound to a receiver mobile terminal stored in the terminal binding subsystem 201 and transmits the mail to the mailbox bound to the receiver mobile terminal via the mail protocol interface module 203 according to the mailbox information.

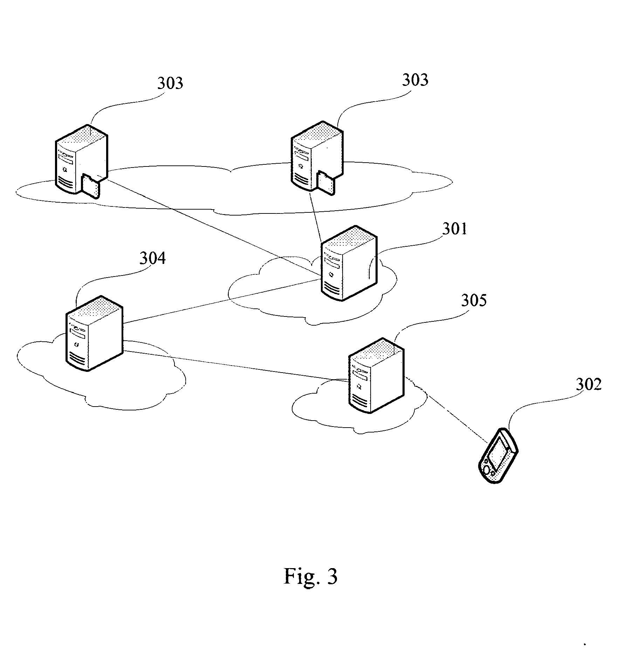

Fig. 3 is a structure block diagram of a mobile mail receiving/sending system of the invention. In Fig. 3, there are mainly arranged in a communication network an email server 303, a push mail server 301, and a mobile terminal 302 with multimedia message processing capability that interconnect and communicate with each other through the communication network. A multimedia message service center 304 is also arranged in the communication network and communicatively connected with the push mail server 301.

The push mail server 301 may be a push mail server shown in Fig. 2. The email server 303 may be an email server for corporate users based on a private communication protocol. It may also be a normal email server based on an open communication protocol. The multimedia message service center 304 may be communicatively connected with the push mail server 301 through POP3 and SMTP over MM3 or MM7 signaling.

Furthermore, the multimedia message service center 304 may also communicatively connect to a wireless session protocol gateway 305 arranged in the communication network through the MM1 signaling. The mobile terminal 302 is connected to the communication network through the wireless session protocol gateway 305.

The mobile terminal 302 which receives/sends email based on the above mobile email receiving/sending system must be a mobile terminal which has registered with and subscribed to the push mail service in advance. The mobile user may subscribe to the push mail service in various ways, such as using WAP, WEB, dialing a service line of an operator or being served in a service center.

The method for mail transmission according to an embodiment of the invention will be described in the following based on the mail transmission system and mail push server in the above embodiments.

A method for mail transmission according to the invention includes the following process.

First, a push mail server inquiries about change information of a mailbox in an email server uniquely bound to an identification of a mobile terminal, according to identification information of the mobile terminal that has registered with and subscribed to the push mail service. When a mobile user registers with and subscribes to the push mail service, the push mail server obtains the user's authorization for accessing a mailbox in the email server specified by the mobile user. The push mail server may determine whether there is any change of the mailbox status between the current access and the previous one using a predefined program. That is, it may determine whether there is any new mail. When there is a change, the following steps are executed.

Next, after obtaining the change information of the mailbox, the push mail server transmits prompt information that a new mail is received to the mobile terminal according to the stored mobile terminal identification bound to the mailbox.

Thereafter, after the mobile terminal issues an instruction to retrieve a mail to the push mail server, the push mail server then receives the mail from the email server and converts the mail into a mobile network message and transmits it to the mobile network server.

Finally, the mobile network server delivers the converted mobile network message to the mobile terminal and returns a mail delivery completion message to the push mail server.

It is possible to send an email to a mobile user using the above steps.

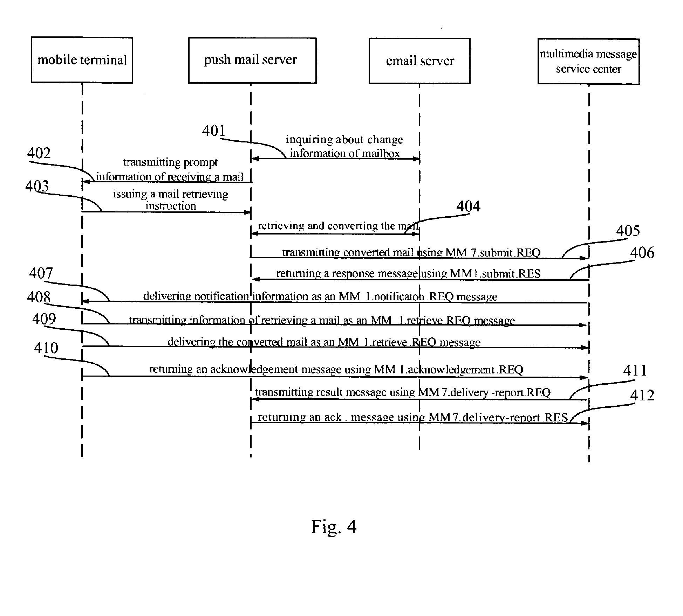

Fig. 4 is a flow chart of a first embodiment of the method for mail transmission of the invention. In Fig. 4, a multimedia message service center is provided as an example of a mobile network server to implement sending an email to a mobile terminal, where the following steps are included.

Step 401: At a fixed time or in a round-robin way, the push mail server inquiries about change information of a mailbox (e.g., the arrival of a new mail and receipt of a sent mail) in an email server bound to a unique identification of a mobile terminal (e.g., a mobile terminal number), according to identification information of the mobile terminal which has registered with and subscribed to the push mail service.

Step 402: After retrieving the change information of the mailbox, the push mail server transmits prompt information of receiving a mail to the mobile terminal via a short message center or a VAS message submission interface of a short message gateway, through a short message, WAP push, etc.

Step 403: The mobile terminal issues an instruction to retrieve a mail to the push mail server.

Step 404: The push mail server retrieves the mail from the email server by employing a message carried by protocols such as FTP, HTTP, SMTP, POP3 IMAP, etc., and converts the body and attachment of the mail into a multimedia message format according to the multimedia message encapsulation method defined in the latest version of OMA-MMS-ENC.

Step 405: The push mail server transmits the mail converted to a multimedia message format, i.e., the multimedia message, to the multimedia message service center as an MM7_submit.REQ message.

Step 406: The multimedia message service center returns a response message to the push mail server using MM1_submit.RES.

Step 407: The multimedia message service center delivers notification information to the mobile terminal as an MM1_notificatino.REQ message.

Step 408: The mobile terminal transmits information extracted from the mail in a multimedia message format to the multimedia message service center as an MM1_retrieve.REQ message.

Step 409: The multimedia message service center delivers the mail converted into a multimedia message format to the mobile terminal as an MM1_retrieve.RES message.

Step 410: After retrieving the mail, the mobile terminal returns an acknowledge message to the multimedia message service center using MM1_acknowledement.REQ.

Step 411: The multimedia message service center transmits a mail delivery result message to the push mail server using MM7_delivery_report.REQ.

Step 412: The push mail server returns an acknowledge message to the multimedia message service center using MM7_delivery_report.RES.

Another method for mail transmission of the invention includes the following procedure.

First, a mobile terminal which has registered with and subscribed to the push mail service transmits a compiled mobile network message and a receiver's mailbox information to a mobile network server.

Next, the mobile network server transmits the received mobile network message and the receiver's mailbox information to a push mail server.

Then, the mobile network server transmits information on completion of message sending to the mobile terminal.

Finally, the push mail server converts the mobile network message into a mail format and transmits the converted mail to the email server according to the receiver's mailbox information.

Sending emails by a mobile terminal can be implemented using the above steps.

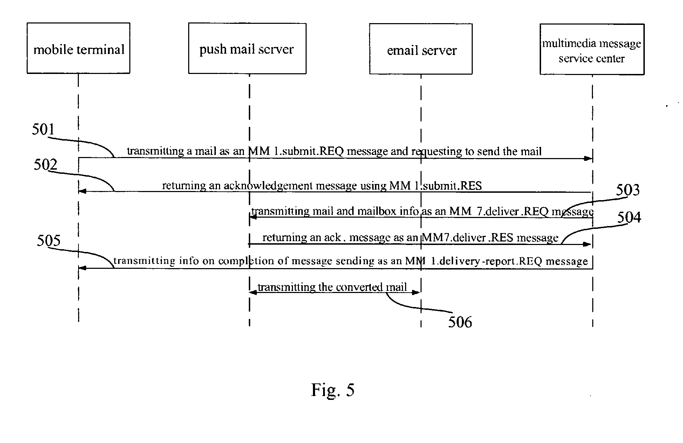

Fig. 5 is a flow chart of a second embodiment of the method for mail transmission of the invention. In Fig. 5, a multimedia message service center is still provided as an example of a mobile network server to implement sending an email to a mobile terminal, where the following steps are included.

Step 501: A mobile terminal which has registered with and subscribed to the push mail service compiles a mail in a multimedia message format directly or using a private terminal application, and transmits the mail to the multimedia message service center as an MM1_submit.REQ message to request mail transmission. Here, the mail in a multimedia message format is a multimedia message.

Step 502: The multimedia message service center returns an acknowledge message of the mail receiving result to the mobile terminal using MM1_submit.RES.

Step 503: The multimedia message service center authorizes the mobile terminal and determines whether the mobile terminal has registered with and subscribed to the push mail service in advance. For an authorized mobile terminal, the multimedia message service center transmits the mail in a multimedia message format and the mailbox information of a mail receiver to the push mail service as an MM7_deliver.REQ message. For an unauthorized mobile terminal, the push mail service ends.

Step 504: The push mail server returns an acknowledge message of the mail sending result to the multimedia message service center as an MM7_deliver.RES message.

Step 505: The multimedia message service center transmits information on completion of mail sending to the mobile terminal as an MM1_deliver.RES message.

Step 506: The push mail server converts the mail into a mail format according to a way of partitioning an encapsulated element of a multimedia message into an attachment in a mail format as defined by the latest version of OMA-MMS-ENC, and transmits the converted mail to the email server where the mailbox is located using a messages carried by protocols such as FTP, HTTP, SMTP, POP3, IMAP, etc., according to identification information of the mail receiver.

In the above embodiments, the invention is described by taking a multimedia message service center as an example. The mail transmission procedure is the same as that of the above embodiments when the mobile network server is a short message center or a wireless access gateway, which is not elucidated here.

In summary, the invention provides a total solution to receiving/sending a mail in a mobile way for a normal mobile terminal, based on an email and mobile network message service. The solution may fully utilize an existing open protocol and network resources to address the issue of technical openness. For example, mail receiving and sending may be provided for an MMS mobile terminal by implementing MM7/MM3, POP3 and SMTP protocols using a private push mail server. During mail receiving, the MMS mobile terminal may be configured to retrieve a mail in a multimedia format by a mail query access which simulates a mobile client and which is initiated by the push mail server towards a user customized mail system and the conversion of a mail format. During mail transmission, the push mail server converts the mail in a multimedia format and pushes the mobile mail according to identification information of the mail receiver. The invention has the following advantages over the existing push mail technical solutions: it makes the mail push system to have good openness by using an existing open protocol and network resources; by using a message inbox/outbox of an existing mobile terminal, most normal mobile terminals can be used and no private terminal is required.

Finally, although the invention has been described in detail by reference to some exemplary embodiments, the above embodiments are intended to illustrate rather than limit the technical solutions of the invention. Those skilled in the art should appreciate that any modifications and equivalent substitutions for the invention are possible without departing the scope of the invention.

## Claims

1. A push mail server (301) for mail transmission comprising:
a terminal binding subsystem (201) adapted to store an identification of a mobile terminal which has registered with and subscribed to a push mail service and email-box information in an email server bound to the identification of the mobile terminal;
a mail push core processing module (202) adapted to deliver push notifications and forward mails according to a binding relationship between a mobile terminal and an email-box stored in the terminal binding subsystem and initiate an inquiry request about the change information of a mailbox to a mail protocol interface module (203); and
the mail protocol interface module (203) adapted to communicate with the email server to retrieve or send emails and inquire about change information of the mailbox according to the inquiry request about the change information of the mailbox initiated by the mail push core processing module;
**characterized by** further comprising:
a multimedia message protocol conversion module (204) connected to the mail push core processing module, the multimedia message protocol conversion module being adapted to communicate with a multimedia message center to convert a mail to a multimedia message and convert a multimedia message to a mail;
wherein the push mail server (301) is communicatively connected to a multimedia message service center (304) via MM7 signaling: and
the push mail server (301) is adapted to transmit the multimedia message converted from the mail to the multimedia message service center (304) as an MM7_submit.REQ message and to receive a mail in a multimedia message format and the mailbox information of a mail receiver as an MM7_deliver.REQ message transmitted from the multimedia message server (304).

2. The push mail server of claim 1, wherein
the mail push core processing module (202) is adapted to retrieve an email in the email-box via the mail protocol interface module, inquire about the mobile terminal identification bound to the mailbox stored in the terminal binding subsystem, and transmit the mail and the mobile terminal identification to the multimedia message protocol conversion module; and
the multimedia message protocol conversion module (204) is adapted to transmit the multimedia message converted from the received mail to the multimedia message center, and carry the mobile terminal identification within the multimedia message.

3. A mobile mail receiving/sending system comprising an email server (303), wherein the system further comprises a push mail server (301) according to any of claims 1-2 and a multimedia message service center (304) communicatively connected to the push mail server (301), wherein
the multimedia message service center (304) is adapted to deliver the received multimedia message according to the received mobile terminal identification.

4. The mobile mail receiving/sending system of claim 3, wherein the email server (301) is an email server for corporate users based on a private communication protocol and/or a normal email server based on an open communication protocol.

5. The mobile mail receiving/sending system of claim 4, wherein the multimedia message service center (304) is further communicatively connected to a wireless session protocol gateway arranged in a communication network via MM1 signaling, and transmits the multimedia message through the wireless session protocol gateway.

6. A method for mail transmission, comprising:
inquiring (401), by a push mail server (301), about change information of a mailbox in an email server bound to an identification of a mobile terminal according to the identification of the mobile terminal which has registered with and subscribed to a push mail service;
transmitting (402), by the push mail server, prompt information of receiving a mail to the mobile terminal after retrieving the change information of the mailbox;
retrieving, by the push mail server, the mail from the email server after the mobile terminal issues an instruction (403) to retrieve the mail to the push mail server, converting the mail into a multimedia message (404), and transmitting (405) the multimedia message converted from the mail to a multimedia message service center as an MM7_submit.REQ message, wherein the push mail server is communicatively connected to the multimedia message service center -via MM7 signaling; and
delivering (409), by the multimedia message service center, the mail converted into a multimedia message format to the mobile terminal and returning (411) mail delivery result information to the push mail server.

7. The method of claim 6, wherein the push mail server inquires (401) about the change information of the mailbox in the email server at a fixed time or in a round-robin way.

8. The method of claim 6, wherein the push mail server transmits (402) the prompt information of receiving a mail to the mobile terminal using a short message.

9. The method of claim 6, wherein the multimedia message service center (411) returns a mail delivery result message to the push mail server using MM7_delivery_report.REQ after receiving the mail.

10. The method of any of claims 6 to 9, before the multimedia message service center delivers the mail converted into a multimedia message format to the mobile terminal, further comprising:
delivering (407), by the multimedia message service center, notification information to the mobile terminal as an MM1_notification.REQ message; and
transmitting (408), by the mobile terminal, information extracted from the mail in a multimedia message format to the multimedia message service center as an MM1_retrieve.REQ message.

11. The method of claim 10, wherein delivering the mail converted into a multimedia message format to the mobile terminal and returning mail delivery result information to the push mail server by the multimedia message service center comprises:
delivering (409), by the multimedia message service center, the mail converted into a multimedia message format to the mobile terminal as an MM1_retrieve.RES message;
returning (410), by the mobile terminal, after retrieving a mail, an acknowledge message to the multimedia message service center using MM1_acknowledgment.REQ;
transmitting (411), by the multimedia message service center, mail delivery result information to the push mail server using MM7_delivery_report.REQ; and
returning (412), by the push mail server, an acknowledge message to the multimedia message service center using MM7_delivery_report.RES.

## Patentansprüche

1. Push-Mail-Server (301) für die Mail-Übertragung, der Folgendes umfasst:
ein Endgerätanbindungs-Untersystem (201), das beschaffen ist, um eine Identifikation eines mobilen Endgerätes, das bei einem Push-Mail-Dienst registriert ist und diesen abonniert hat, und E-Mail-Box-Informationen in einem E-Mail-Server, der an die Identifikation des mobilen Endgerätes angebunden ist, zu speichern;
ein Mail-Push-Kern-Verarbeitungsmodul (202), das beschaffen ist, um in Übereinstimmung mit einer Anbindungsbeziehung zwischen einem mobilen Endgerät und einer E-Mail-Box, die in dem Endgerätanbindungs-Untersystem gespeichert ist, Push-Benachrichtigungen zu liefern und Mails weiterzuleiten und eine Abfrageanforderung nach den Änderungsinformationen einer Mailbox zu einem Mail-Protokoll-Schnittstellenmodul (203) einzuleiten; und
das Mail-Protokoll-Schnittstellenmodul (203), das beschaffen ist, um mit dem E-Mail-Server zu kommunizieren, um E-Mails abzurufen oder zu senden, und nach den Änderungsinformationen der Mailbox in Übereinstimmung mit der Abfrageanforderung nach den Änderungsinformationen der Mailbox, die durch das Mail-Push-Kern-Verarbeitungsmodul eingeleitet worden ist, abzufragen;
**dadurch gekennzeichnet, dass** er ferner Folgendes umfasst:
ein Multimedia-Nachrichtenprotokoll-Umsetzungsmodul (204), das mit dem Mail-Push-Kern-Verarbeitungsmodul verbunden ist, wobei das Multimedia-Nachrichtenprotokoll-Umsetzungsmodul beschaffen ist, um mit einer Multimedia-Nachrichtenzentrale zu kommunizieren, um eine Mail in eine Multimedia-Nachricht umzusetzen und um eine Multimedia-Nachricht in eine Mail umzusetzen;
wobei der Push-Mail-Server (301) über eine MM7-Signalgebung mit einer Multimedia-Nachrichtendienstzentrale (304) kommunikativ verbunden ist; und
der Push-Mail-Server (301) beschaffen ist, um die aus der Mail umgesetzte Multimedia-Nachricht als eine MM7_submit.REQ-Nachricht an die Multimedia-Nachrichtendienstzentrale (304) zu senden und um eine Mail in einem Multimedia-Nachrichtenformat und die Mailbox-Informationen eines Mail-Empfängers als eine von dem Multimedia-Nachrichten-Server (304) gesendete MM7_deliver.REQ-Nachricht zu empfangen.

2. Push-Mail-Server nach Anspruch 1, wobei
das Mail-Push-Kern-Verarbeitungsmodul (202) beschaffen ist, um eine E-Mail in der E-Mail-Box über das Mail-Protokoll-Schnittstellenmodul abzurufen, nach der Identifikation des mobilen Endgeräts, das an die Mailbox angebunden ist, die in dem Endgerätanbindungs-Untersystem gespeichert ist, zu suchen und die Mail und die Identifikation des mobilen Endgeräts an das Multimedia-Nachrichtprotokoll-Umsetzungsmodul zu senden; und
das Multimedia-Nachrichtenprotokoll-Umsetzungsmodul (204) beschaffen ist, um die aus der empfangenen Mail umgesetzte Multimedia-Nachricht an die Multimedia-Nachrichtenzentrale zu senden und die Identifikation des mobilen Endgerätes in der Multimedia-Nachricht zu übertragen.

3. Mobiles Mail-Empfangs-/Sendesystem, das einen E-Mail-Server (303) umfasst, wobei das System ferner einen Push-Mail-Server (301) nach einem der Ansprüche 1-2 und eine Multimedia-Nachrichtendienstzentrale (304), die kommunikativ mit dem Push-Mail-Server (301) verbunden ist, umfasst, wobei
die Multimedia-Nachrichtendienstzentrale (304) beschaffen ist, um die empfangene Multimedia-Nachricht in Übereinstimmung mit der empfangenen Identifikation des mobilen Endgerätes zuzustellen.

4. Mobiles Mail-Empfangs-/Sendesystem nach Anspruch 3, wobei der E-Mail-Server (301) ein E-Mail-Server für Firmenbenutzer basierend auf einem nichtöffentlichen Kommunikationsprotokoll und/oder ein normaler E-Mail-Server basierend auf einem offenen Kommunikationsprotokoll ist.

5. Mobiles Mail-Empfangs-/Sendesystem nach Anspruch 4, wobei die Multimedia-Nachrichtendienstzentrale (304) ferner über MM1-Signalgebung kommunikativ mit einem drahtlosen Sitzungsprotokoll-Gateway verbunden ist, das in einem Kommunikationsnetz angeordnet ist, und die Multimedia-Nachricht durch das drahtlose Sitzungsprotokoll-Gateway sendet.

6. Verfahren für die Mail-Übertragung, das Folgendes umfasst:
Abfragen (401) durch einen Push-Mail-Server (301) nach Änderungsinformationen einer Mailbox in einem E-Mail-Server, der an eine Identifikation eines mobilen Endgerätes angebunden ist, in Übereinstimmung mit der Identifikation des mobilen Endgerätes, das bei einem Push-Mail-Dienst registriert ist und diesen abonniert hat;
Senden (402) durch den Push-Mail-Server von Aufforderungsinformationen zum Empfangen einer Mail an das mobile Endgerät nach dem Abrufen der Änderungsinformationen der Mailbox;
Abrufen durch den Push-Mail-Server der Mail von dem E-Mail-Server, nachdem das mobile Endgerät einen Befehl, die Mail abzurufen, an den Push-Mail-Server ausgibt (403), Umsetzen der Mail in eine Multimedia-Nachricht (404) und Senden (405) der aus der Mail umgesetzten Multimedia-Nachricht als eine MM7_submit.REQ-Nachricht an eine Multimedia-Nachrichtendienstzentrale, wobei der Push-Mail-Server über die MM7-Signalgebung mit der Multimedia-Nachrichtendienstzentrale kommunikativ verbunden ist; und
Zustellen (409) durch die Multimedia-Nachrichtendienstzentrale der in ein Multimedia-Nachrichtenformat umgesetzten Mail an das mobile Endgerät und Zurückschicken (411) der Mail-Zustellungsergebnis-Informationen an den Push-Mail-Server.

7. Verfahren nach Anspruch 6, wobei der Push-Mail-Server nach den Änderungsinformationen der Mailbox in dem E-Mail-Server zu einem festen Zeitpunkt oder auf eine Umlaufart abfragt (401).

8. Verfahren nach Anspruch 6, wobei der Push-Mail-Server die Aufforderungsinformationen des Empfangens einer Mail unter Verwendung einer Kurznachricht an das mobile Endgerät sendet (402).

9. Verfahren nach Anspruch 6, wobei die Multimedia-Nachrichtendienstzentrale (411) nach dem Empfangen der Mail eine Mail-Zustellungsergebnis-Nachricht unter Verwendung einer MM7_delivery_report.REQ an den Push-Mail-Server zurückschickt.

10. Verfahren nach einem der Ansprüche 6 bis 9, das, bevor die Multimedia-Nachrichtendienstzentrale die in ein Multimedia-Nachrichtenformat umgesetzte Mail an das mobile Endgerät zustellt, ferner Folgendes umfasst:
Zustellen (407) durch die Multimedia-Nachrichtendienstzentrale von Benachrichtigungsinformationen an das mobile Endgerät als eine MM1_notification.REQ-Nachricht; und
Senden (408) durch das mobile Endgerät von Informationen, die aus der Mail extrahiert worden sind, in einem Multimedia-Nachrichtenformat an die Multimedia-Nachrichtendienstzentrale als eine NM1_retrieve.REQ-Nachricht.

11. Verfahren nach Anspruch 10, wobei das Zustellen der in ein Multimedia-Nachrichtenformat umgesetzten Mail an das mobile Endgerät und das Zurückschicken der Mail-Zustellungsergebnis-Informationen an den Push-Mail-Server durch die Multimedia-Nachrichtendienstzentrale Folgendes umfasst:
Zustellen (409) durch die Multimedia-Nachrichtendienstzentrale der in ein Multimedia-Nachrichtenformat umgesetzten Mail als eine NM1_retrieve.RES-Nachricht an das mobile Endgerät;
Zurückschicken (410) durch das mobile Endgerät nach dem Abrufen einer Mail einer Quittierungsnachricht unter Verwendung einer MM1_acknowledgement.REQ an die Multimedia-Nachrichtendienstzentrale;
Senden (411) durch die Multimedia-Nachrichtendienstzentrale der Mail-Zustellungsergebnis-Informationen unter Verwendung einer MM7_delivery_report.REQ an den Push-Mail-Server; und
Zurückschicken (412) durch den Push-Mail-Server einer Quittierungsnachricht unter Verwendung einer MM7_delivery_report.RES an die Multimedia-Nachrichtendienstzentrale.

## Revendications

1. Serveur de courriel poussé (301) pour la transmission de courriel, comprenant :
un sous-système d'association de terminal (201) conçu pour stocker une identification d'un terminal mobile s'étant enregistré et abonné à un service de courriel poussé et des informations de boîtes aux lettres électroniques sur un serveur de courriel associé à l'identification du terminal mobile ;
un module de traitement central de courriel poussé (202) conçu pour délivrer des notifications de pousser et pour réexpédier des courriels conformément à une relation d'association entre un terminal mobile et une boîte aux lettres électronique stockée dans le sous-système d'association de terminal et émettre une demande de renseignements concernant les informations de modification d'une boîte aux lettres à destination d'un module d'interface de protocole de courriel (203) ; et
le module d'interface de protocole de courriel (203) conçu pour communiquer avec le serveur de courriel afin d'extraire et d'envoyer des courriels et pour demander des informations concernant la modification de la boîte aux lettres conformément à la demande de renseignements concernant les informations de modification de la boîte aux lettres émise par le module de traitement central de courriel poussé ;
**caractérisé en ce qu'**il comprend en outre :
un module de conversion de protocole de messages multimédia (204) connecté au module de traitement central de courriel poussé, le module de conversion de protocole de messages multimédia étant conçu pour communiquer avec un centre de messagerie multimédia afin de convertir un courriel en un message multimédia et de convertir un message multimédia en un courriel ;
dans lequel le serveur de courriel poussé (301) est connecté par voie de communication à un centre de service de messagerie multimédia (304) par l'intermédiaire d'une signalisation MM7 ; et
le serveur de courriel poussé (301) est conçu pour transmettre le message multimédia converti à partir du courriel au centre de service de messagerie multimédia (304) sous la forme d'un message MM7_submit.REQ et pour recevoir un courriel dans un format de message multimédia et les informations de boîtes aux lettres d'un récepteur de courriel sous la forme d'un message MM7_deliver.REQ transmis depuis le serveur de messagerie multimédia (304).

2. Serveur de courriel poussé selon la revendication 1, dans lequel
le module de traitement central de courriel poussé (202) est conçu pour extraire un courriel de la boîte aux lettres électronique via le module d'interface de protocole de courriel, pour se renseigner sur l'identification de terminal mobile associée à la boîte aux lettres stockée dans le sous-système d'association de terminal, et pour transmettre le courriel et l'identification de terminal mobile au module de conversion de protocole de messages multimédia ; et
le module de conversion de protocole de messages multimédia (204) est conçu pour transmettre le message multimédia converti à partir du courriel reçu au centre de messagerie multimédia, et pour acheminer l'identification de terminal mobile dans le message multimédia.

3. Système de réception/envoi de courriel mobile comprenant un serveur de courriel (303), le système comprenant en outre un serveur de courriel poussé (301) selon l'une des revendications 1 et 2 et un centre de service de messagerie multimédia (304) connecté par voie de communication au serveur de courriel poussé (301), dans lequel le centre de services de messagerie multimédia (304) est conçu pour délivrer le message multimédia reçu conformément à l'identification de terminal mobile reçue.

4. Système de réception/envoi de courriel mobile selon la revendication 3, dans lequel le serveur de courriel (301) est un serveur de courriel destiné à des utilisateurs d'entreprises basé sur un protocole de communication privé et/ou un serveur de courriel normal basé sur un protocole de communication ouvert.

5. Système de réception/envoi de courriel mobile selon la revendication 4, dans lequel le centre de service de messagerie multimédia (304) est en outre connecté par voie de communication à une passerelle à protocole de session sans fil disposée dans un réseau de communication via une signalisation MM1, et transmet le message multimédia par l'intermédiaire de la passerelle à protocole de session sans fil.

6. Procédé de transmission de courriel, comprenant :
la demande (401), par un serveur de courriel poussé (301), de renseignements concernant des informations de modification d'une boîte aux lettres sur un serveur de courriel associé à une identification d'un terminal mobile conformément à l'identification du terminal mobile s'étant enregistré et abonné à un service de courriel poussé ;
la transmission (402), par le serveur de courriel poussé, d'informations d'invite pour recevoir un courriel destiné au terminal mobile après avoir extrait les informations de modification de la boîte aux lettres ;
l'obtention, par le serveur de courriel poussé, du courriel en provenance du serveur de courriel après que le terminal mobile a envoyé une instruction (403) d'extraction du courriel au serveur de courriel poussé, la conversion du courriel en un message multimédia (404) et la transmission (405) du message multimédia converti à partir du courriel à un centre de service de messagerie multimédia sous la forme d'un message MM7_submit.REQ, dans lequel le serveur de courriel poussé est connecté par voie de communication au centre de service de messagerie multimédia par l'intermédiaire d'une signalisation MM7 ; et
la fourniture (409), par le centre de service de messagerie multimédia, du courriel converti selon le format d'un message multimédia au terminal mobile et le renvoi (411) d'informations concernant le résultat de la fourniture du courriel au serveur de courriel poussé.

7. Procédé selon la revendication 6, dans lequel le serveur de courriel poussé demande (401) des informations concernant la modification de la boîte aux lettres sur le serveur de courriel à un instant fixe ou tour à tour.

8. Procédé selon la revendication 6, dans lequel le serveur de courriel poussé transmet (402) les informations d'invite pour la réception d'un courriel au terminal mobile à l'aide d'un message court.

9. Procédé selon la revendication 6, dans lequel le centre de service de messagerie multimédia (411) renvoie un message concernant le résultat de la fourniture de courriel au serveur de courriel poussé en utilisant M7_delivery_report.REQ après la réception du courriel.

10. Procédé selon l'une quelconque des revendications 6 à 9 comprenant en outre, avant que le centre de service de messagerie multimédia ne fournisse le courriel converti selon le format d'un message multimédia au terminal mobile :
la fourniture (407) par le centre de service de messagerie multimédia, d'informations de notification au terminal mobile sous la forme d'un message MM1_notification.REQ ; et
la transmission (408), par le terminal mobile, d'informations extraites du courriel selon le format d'un message multimédia au centre de service de messagerie multimédia sous la forme d'un message MM1_retrieve.REQ.

11. Procédé selon la revendication 10, dans lequel la fourniture du courriel converti selon le format d'un message multimédia au terminal mobile et le renvoi d'informations concernant le résultat de la fourniture de courriel au serveur de courriel poussé par le centre de service de messagerie multimédia comprennent :
la fourniture (409), par le centre de service de messagerie multimédia, du courriel converti selon le format d'un message multimédia au terminal mobile sous la forme d'un message NM1_retrieve RES ;
le renvoi (410) , par le terminal mobile après avoir extrait un courriel, d'un message d'accusé de réception au centre de service de messagerie multimédia à l'aide de MM1_acknowledgement.REQ ;
la transmission (411), par le centre de service de messagerie multimédia, d'informations concernant le résultat de la fourniture du courriel au serveur de courriel poussé à l'aide de MM7_delivery_report REQ ; et
le renvoi (412), par le serveur de courriel poussé, d'un message d'accusé de réception au centre de service de messagerie multimédia à l'aide de MM7_delivery_report.RES.
